# FASCICULE DE BREVET EUROPEEN

(11) **EP 4 367 837 B1**
(45) Date de publication et mention de la délivrance du brevet: **12.11.2025**
(21) Numéro de dépôt: 22751135.9
(22) Date de dépôt: 07.07.2022
(51) Int. Cl.: H04L 9/40

(54) **PASSERELLE DE TRANSFERT SÉCURISÉ**
GATEWAY FÜR SICHEREN TRANSFER
SECURE TRANSFER GATEWAY

(30) Priorité: 07.07.2021 FR 2107339
(43) Date de publication de la demande: 15.05.2024
(73) Titulaire: Arc Data Shield, 44840 Les Sorinières (FR)
(72) Inventeur: COMBIER, Arnaud, 69780 MIONS (FR)
(74) Mandataire: Plasseraud IP
(86) Numéro de dépôt international: PCT/FR2022/051364
(87) Numéro de publication internationale: WO 2023/281223

(56) Documents cités:
- EP-A1- 3 829 101
- US-A1- 2013 100 963
- US-A1- 2017 359 383

## Description

### Domaine technique

La présente invention relève du domaine de la sécurité des systèmes d'information. Plus précisément, la présente invention porte sur un dispositif de transfert de données numériques. La présente invention porte également, de manière non exhaustive, sur un système de communication comprenant un tel dispositif, sur un procédé de transfert de données numériques mettant en jeu un tel dispositif dans un tel système et sur un programme informatique conçu pour le pilotage d'un tel dispositif.

### Technique antérieure

Le développement des réseaux cellulaires tel que la 5G, la virtualisation croissante des réseaux informatiques ou encore l'apparition puis la diffusion de l'internet des objets sont autant d'exemples d'une tendance générale, actuelle, à la décentralisation des communications numériques, aussi bien dans la sphère personnelle que professionnelle.

Ce mouvement s'accompagne nécessairement d'une croissance et d'une complexification des systèmes de sécurité pour faire face à des enjeux récurrents tels que la protection des secrets industriels et commerciaux ou celle de la vie privée.

Un autre enjeu permanent est celui de la sécurisation des systèmes informatiques en lien avec les hôpitaux, ou dans le domaine de la défense, ou des systèmes de contrôle-commande des grands réseaux et infrastructures, notamment pour la distribution de fluides (eau, gaz, etc.), ou dans les transports, de tels systèmes pouvant faire l'objet d'attaques sophistiquées.

Dans ce contexte général, il est connu de prévoir diverses briques de sécurité au niveau d'équipements d'interconnexion de réseau informatique, tels que des passerelles réseaux ou des routeurs, pour participer à sécuriser les transferts de données numériques.

Un exemple d'une telle brique de sécurité est l'insertion d'un pare-feu matériel. Un tel dispositif possède, au minimum, deux interfaces réseau, analyse les données qui transitent par lui, et vérifie si ces données correspondent à des règles prédéfinies. Ces règles peuvent être de plusieurs types, par exemple, il est possible de demander au pare-feu de rejeter systématiquement toutes les requêtes provenant d'un domaine précis, ou bien toutes les requêtes utilisant un protocole spécifique, ou bien encore toutes celles relatives à tel ou tel numéro de port.

Un inconvénient d'un pare-feu matériel est que le filtrage est complexe à mettre en œuvre. En outre, des données illégitimes pourraient ne pas être filtrées dès lors qu'elles sont soit masquées par un chiffrement, soit fournies au même format que celui des données légitimes.

Un autre exemple de brique de sécurité est une passerelle à rupture de protocole au moyen d'un élément de conversion double.

Une passerelle à rupture de protocole a pour effet de ne pas autoriser l'établissement d'une session directe de communication entre un client et un serveur, mais, au contraire, à intercepter une telle session. La passerelle à rupture de protocole comprend un module « pseudo-serveur » communiquant avec le client à l'aide d'un protocole reconnu par le client, un module « pseudo-client » communiquant avec le serveur à l'aide d'un protocole reconnu par le serveur, et un filtre intégrant l'élément de conversion double. Le filtre relie le module pseudo-serveur au module pseudo-client, emploie un protocole restreint et met en œuvre, à ce titre, deux conversions successives de protocole, à savoir entre le protocole client et le protocole restreint, d'une part, et entre le protocole serveur et le protocole restreint, d'autre part.

Le but est double : empêcher les attaques liées à un protocole spécifique et permettre d'inspecter le contenu des communications.

Un inconvénient de la rupture de protocole est qu'elle ne permet pas d'assurer la transmission de l'ensemble des données légitimes possibles, mais seulement celle des données compatibles avec le protocole restreint. Un autre inconvénient de la rupture de protocole est que certaines données illégitimes peuvent tout de même transiter par le protocole restreint.

Un autre exemple de brique de sécurité est une diode réseau. Une diode réseau est unidirectionnelle, elle reçoit des données numériques en provenance d'un guichet amont placé sur un réseau source, et transmet ces données numériques vers un guichet aval placé sur un réseau bas à protéger. Bien sûr, il est possible d'agencer deux diodes pour permettre des échanges bidirectionnels.

Un inconvénient des diodes réseau est que la sécurité des échanges dépend de l'intégrité des guichets de transfert placés sur les réseaux à sécuriser. Toute corruption du guichet amont entraîne de facto la perte de contrôle du transfert de données et un risque de transmission illégitime au guichet aval.

De manière générale, plus les briques de sécurité existantes offrent un niveau élevé de sécurité, plus elles dégradent la possibilité des échanges sans jamais pour autant atteindre un cloisonnement intégral des réseaux à sécuriser.

Pour sécuriser davantage les transferts de données numériques entre deux réseaux informatiques distincts, il est souhaitable de surmonter les inconvénients précités.

Il est également souhaitable de pouvoir vérifier la légitimité d'un transfert entre deux réseaux informatiques, ainsi que la légitimité des données numériques à transférer, de manière indépendante des réseaux impliqués.

EP 3 829 101 A1, US 2017/359383 A1 et US 2013/100963 A1 sont des arts antérieurs pertinents.

### Résumé

La présente divulgation vient améliorer la situation.

Il est proposé, selon un aspect de l'invention, un dispositif de transfert de données numériques, dans un système de communication, entre un premier réseau et un deuxième réseau, le dispositif comprenant :
une première interface de communication avec le premier réseau,
une deuxième interface de communication avec le deuxième réseau,
une troisième interface de communication avec un contrôleur de transfert de données numériques à travers le dispositif de transfert, et
une quatrième interface de communication agencée pour être raccordée à au moins une mémoire de transfert,
le dispositif de transfert étant configuré pour activer successivement, de manière respectivement exclusive,
un premier canal de transmission à travers la première et la quatrième interface de communication,
un deuxième canal de transmission à travers la troisième et la quatrième interface de communication, et
un troisième canal de transmission à travers la deuxième et la quatrième interface de communication.

Grâce à l'architecture spécifique de ce dispositif de transfert de données numériques, un cloisonnement complet entre les deux réseaux est obtenu, dans le sens où aucune liaison physique entre ces deux réseaux n'est jamais établie.

Par ailleurs, toujours de par l'architecture spécifique de ce dispositif de transfert de données numériques, le contrôleur de transfert de données numériques peut être rendu indépendant et dénué d'une quelconque liaison avec les réseaux à cloisonner, et ce quel que soit leur niveau de corruption.

Il est possible que le dispositif comprenne en outre une mémoire de transfert raccordée à la quatrième interface de communication, ou éventuellement plusieurs mémoires de transfert raccordées à la quatrième interface de communication.

La mémoire de transfert est un dispositif de stockage de données numériques tel qu'une mémoire vive (RAM), mémoire flash (carte SD, clé USB), disque dur (HDD), disque à semi-conducteur (SSD), par exemple. Ainsi raccordée à la quatrième interface de communication, une telle mémoire de transfert sert de support pour stocker temporairement les données en cours de transfert. Ce support peut être successivement connecté, par le dispositif de transfert, au premier réseau, puis au contrôleur de transfert et enfin au deuxième réseau pour transférer des données du premier réseau au deuxième réseau, avec un contrôle intermédiaire effectué par le contrôleur de transfert. De manière symétrique, ce support peut être successivement connecté, par le dispositif de transfert, au deuxième réseau, puis au contrôleur de transfert et enfin au premier réseau pour transférer des données du deuxième réseau au premier réseau, avec un contrôle intermédiaire effectué par le contrôleur de transfert.

Par exemple, la mémoire de transfert peut comprendre :
une première partition dédiée à un stockage de données numériques en cours de transfert depuis le premier réseau vers le deuxième réseau, et
une deuxième partition dédiée à un stockage de données numériques en cours de transfert depuis le deuxième réseau vers le premier réseau.

Ainsi, lorsque le dispositif de transfert active successivement le premier canal de transmission puis le deuxième canal de transmission, il est attendu que seule la première partition contienne des données issues du premier réseau à transférer vers le deuxième réseau. Il peut donc être prévu que dans une telle situation, le contrôleur de transfert efface automatiquement l'éventuel contenu de la deuxième partition afin d'en éviter le transfert illégitime vers le deuxième réseau.

Il est proposé, selon un autre aspect de l'invention, un système de communication entre un premier réseau et un deuxième réseau, le système comprenant :
le dispositif de transfert de données numériques ci-avant, et
un contrôleur de transfert de données numériques à travers le dispositif de transfert,
ledit contrôleur de transfert étant raccordé à la troisième interface de communication du dispositif de transfert et étant indépendant à la fois du premier réseau et du deuxième réseau.

Par « indépendant du premier réseau et du deuxième réseau » il est entendu que le contrôleur de transfert est dénué de liaison de données physique, bus ou réseau, même temporaire avec ces deux réseaux. De ce fait, le contrôleur de transfert n'est pas susceptible de recevoir des instructions de la part d'une quelconque entité, potentiellement corrompue, appartenant à l'un de ces deux réseaux.

Le dispositif de transfert allié au contrôleur de transfert permet de gérer de bout en bout toute forme d'échange de données entre le premier réseau et le deuxième réseau de manière indépendante des deux réseaux. Ainsi, même si une source, située dans l'un des deux réseaux, de données à transférer est corrompue, cette source n'est en mesure de piloter ni le contrôleur de transfert, ni, directement ou indirectement, le dispositif de transfert.

Par exemple, le contrôleur de transfert peut être configuré en outre pour piloter l'activation successive des canaux de transmission par le dispositif de transfert. Par exemple, un tel pilotage peut être effectué au moyen de signaux tout ou rien ne transitant pas par les canaux de transmission. Si l'activation successive des canaux de transmission ne peut être physiquement déclenchée que par le contrôleur de transfert, alors le fonctionnement du dispositif de transfert est rendu indépendant du premier réseau et du deuxième réseau. De ce fait, il est physiquement impossible pour un acteur malveillant de prendre le contrôle du dispositif de transfert au moyen d'instructions logiques issues de l'un ou l'autre des deux réseaux.

Par exemple, le contrôleur de transfert peut être configuré en outre pour piloter un premier contrôleur esclave raccordé au premier réseau, en vue de transmettre, via le premier canal de transmission, un premier ensemble de données numériques entrantes, issues du premier réseau, vers la mémoire de transfert et stocker ledit premier ensemble de données entrantes en tant que premier ensemble de données en cours de transfert. Par exemple, le contrôleur de transfert peut signaler au premier contrôleur esclave si le premier canal de transmission est actif. Ceci permet de déclencher un échange de données entre le premier réseau et la mémoire de transfert dès que le premier canal de transmission est actif et de stopper un tel échange de données dès que le premier canal de transmission n'est plus actif. Le contrôleur de transfert joue dans cet exemple, du point de vue du premier réseau, le rôle de régulateur d'un échange intermittent de données numériques avec le deuxième réseau.

Par exemple, le contrôleur de transfert peut être configuré en outre pour obtenir, via le deuxième canal de transmission, le premier ensemble de données en cours de transfert en vue d'effectuer un contrôle dudit premier ensemble de données en cours de transfert, ledit contrôle fournissant un premier résultat indicatif d'un respect ou d'une violation d'au moins une règle de sécurité relative audit premier ensemble de données en cours de transfert. Les règles de sécurité sont guidées par une politique de sécurité prédéterminée et peuvent être, par exemple, relatives à la confidentialité et/ou à l'intégrité des données numériques en cours de transfert. Le contrôle des données en cours de transfert peut comprendre par exemple l'exécution d'un antivirus ou la vérification de droits de transfert.

Par exemple, le contrôleur de transfert peut être configuré en outre pour piloter un deuxième contrôleur esclave raccordé au deuxième réseau, en vue de transmettre, via le troisième canal de transmission, le premier ensemble de données en cours de transfert vers le deuxième réseau en tant que premier ensemble de données numériques sortantes seulement lorsque le premier résultat n'est indicatif d'aucune violation de règle de sécurité. Cela indique que le transfert du premier ensemble de données vers le deuxième réseau est autorisé par le contrôleur de transfert.

Par exemple, le contrôleur de transfert peut être configuré en outre pour effacer de la mémoire de transfert des données du premier ensemble de données en cours de transfert, sans les transmettre au préalable via le troisième canal de transmission, lorsque le premier résultat les concernant est indicatif d'une violation d'au moins une règle de sécurité. On considère par exemple que le contrôleur de transfert détecte, à un instant donné, une violation d'une règle de sécurité relative au premier ensemble de données en cours de transfert. A cet instant donné, le deuxième canal de transmission est actif, donc la mémoire de transfert n'est raccordée ni au premier réseau ni au deuxième réseau, mais est raccordée au contrôleur de transfert. Le contrôleur de transfert peut donc effacer spécifiquement tout ou partie des données du premier ensemble de données en cours de transfert, ou effacer la totalité du contenu de la mémoire de transfert. Si la mémoire de transfert comprend plusieurs partitions dont une partition dédiée au transfert de données issues du premier réseau vers le deuxième réseau, il est possible de prévoir que la totalité du contenu de cette partition soit effacée.

Par exemple, le système peut être configuré en outre pour :
piloter le deuxième contrôleur esclave, en vue de transmettre, via le troisième canal de transmission, un second ensemble de données numériques entrantes, issues du deuxième réseau, vers la mémoire de transfert et stocker ledit second ensemble de données entrantes en tant que second ensemble de données en cours de transfert,
obtenir, via le deuxième canal de transmission, le second ensemble de données en cours de transfert en vue d'effectuer un contrôle dudit second ensemble de données en cours de transfert, ledit contrôle fournissant un second résultat indicatif d'un respect ou d'une violation d'au moins une règle de sécurité relative audit second ensemble de données en cours de transfert,
piloter le premier contrôleur esclave, en vue de transmettre, via le premier canal de transmission, le second ensemble de données en cours de transfert vers le premier réseau en tant que second ensemble de données numériques sortantes seulement lorsque le second résultat n'est indicatif d'aucune violation de règle de sécurité, et
effacer de la mémoire de transfert des données du second ensemble de données en cours de transfert, sans le transmettre au préalable via le premier canal de transmission, lorsque le second résultat les concernant est indicatif d'une violation d'au moins une règle de sécurité.

Ainsi, le contrôleur de transfert contrôle à la fois les données issues du premier réseau et destinées au deuxième réseau et les données issues du deuxième réseau et destinées au premier réseau. Le contrôleur de transfert contrôle donc tous les échanges de données entre le premier réseau et le deuxième réseau en eux-mêmes, ainsi que leur contenu, c'est-à-dire toutes les données destinées à être échangées entre le premier réseau et le deuxième réseau, dans un sens comme dans l'autre, avant d'autoriser ou de refuser leur transfert effectif.

Il est proposé, selon un autre aspect de l'invention, un procédé de transfert de données numériques, dans un système de communication, entre un premier réseau et un deuxième réseau, par le biais d'un dispositif de transfert comprenant :
une première interface de communication avec le premier réseau,
une deuxième interface de communication avec le deuxième réseau,
une troisième interface de communication avec un contrôleur de transfert de données numériques à travers le dispositif de transfert,
une quatrième interface de communication, et
une mémoire de transfert raccordée à la quatrième interface de communication,
le procédé comprenant une activation successive, de manière respectivement exclusive, d'un premier canal de transmission à travers la première et la quatrième interface de communication, d'un deuxième canal de transmission à travers la troisième et la quatrième interface de communication, et d'un troisième canal de transmission à travers la deuxième et la quatrième interface de communication.

Le procédé peut par exemple comprendre en outre :
une transmission, via le premier canal de transmission, d'un premier ensemble de données numériques entrantes, issues du premier réseau, vers la mémoire de transfert, en vue de leur transfert en tant que premier ensemble de données en cours de transfert,
une communication, via le deuxième canal de transmission, du premier ensemble de données en cours de transfert vers le contrôleur de transfert en vue d'effectuer un contrôle dudit premier ensemble de données en cours de transfert, ledit contrôle fournissant un premier résultat indicatif d'un respect ou d'une violation d'au moins une règle de sécurité relative audit premier ensemble de données en cours de transfert,
une transmission, via le troisième canal de transmission, du premier ensemble de données en cours de transfert vers le deuxième réseau en tant que premier ensemble de données numériques sortantes seulement lorsque le premier résultat n'est indicatif d'aucune violation de règle de sécurité, et
un effacement, de la mémoire de transfert, du premier ensemble de données en cours de transfert lorsque le premier résultat est indicatif d'une violation d'au moins une règle de sécurité.

Le procédé peut par exemple comprendre en outre les étapes suivantes mises en oeuvre par le contrôleur de transfert:
un déclenchement de l'activation du premier canal de transmission par le dispositif de transfert,
une émission d'un signal de début de transmission à destination d'un premier contrôleur esclave raccordé au premier réseau,
après un temps imparti, une émission d'un signal de fin de transmission à destination du premier contrôleur esclave,
un déclenchement de l'activation du deuxième canal de transmission,
une lecture et un contrôle d'un contenu de la mémoire de transfert,
optionnellement, un effacement de tout ou partie du contenu de la mémoire de transfert, et un déclenchement de l'activation du troisième canal de transmission.

Il est proposé, selon un autre aspect de l'invention, un programme informatique comprenant une ou plusieurs instructions pour la mise en oeuvre du procédé ci-avant lorsque ce programme est exécuté par un processeur

La portée de l'invention est définie par les revendications indépendantes.

### Brève description des dessins

D'autres caractéristiques, détails et avantages apparaîtront à la lecture de la description détaillée ci-après, et à l'analyse des dessins annexés.
**Fig. 1**

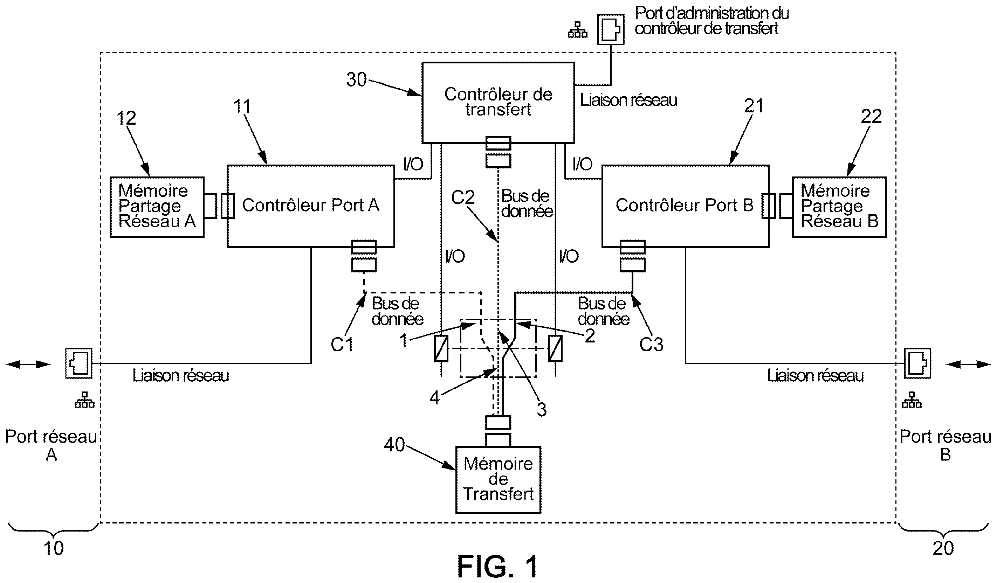

   [Fig. 1] est un schéma fonctionnel d'un système de communication dans un exemple de réalisation de l'invention.
**Fig. 2**

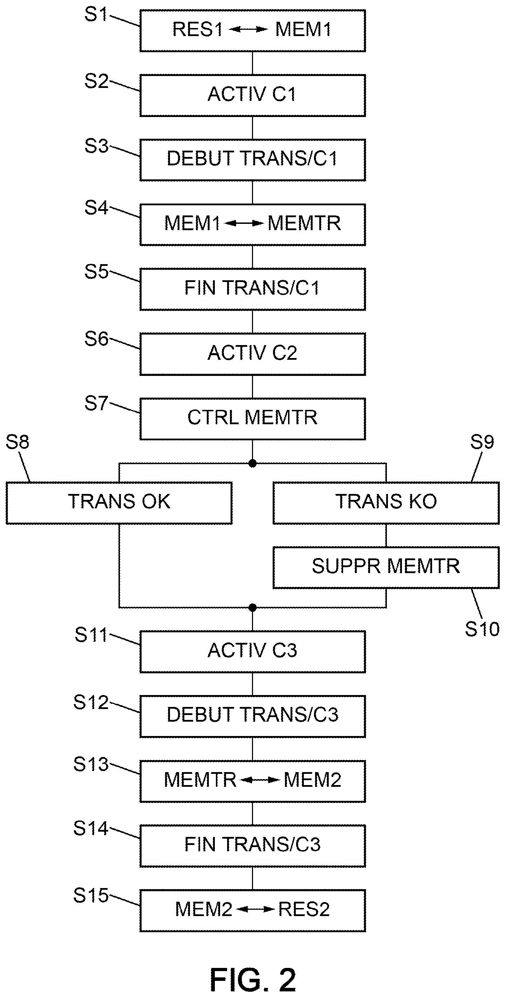

   [Fig. 2] illustre un algorithme général d'un procédé de transfert de données numériques dans un exemple de réalisation de l'invention, par exemple dans un tel système de communication.

### Description des modes de réalisation

Le but de l'invention est d'assurer un transfert de données numériques entre différents réseaux sans jamais établir de communication physique entre ces réseaux. Tout au long de ce document, le terme simplifié de « données » est entendu comme se référant, systématiquement, à des données numériques.

Ainsi, il est proposé de transporter les données issues d'un réseau source vers un contrôleur indépendant des différents réseaux, puis, une fois cette vérification effectuée, de transporter les données vérifiées vers un réseau de destination. Le flux est transféré de façon intermittente et dans un sens à la fois, mais avec un débit élevé et sans altération des données transmises, tout en assurant un découplage physique entre les différents réseaux.

De nombreuses applications sont possibles, en particulier pour les entreprises et organisations disposant de plusieurs systèmes d'informations ayant soit des fonctions ou des sensibilités de données différentes, nécessitant des transferts rapides, de fréquence régulière à quasiment continu, et dont l'objectif de sécurité nécessite un cloisonnement du plus haut niveau, sans liaison réseau entre ces systèmes d'informations ou avec des systèmes extérieurs.

Par exemple, pour les hôpitaux, l'invention peut s'appliquer à la gestion des transferts de données entre les réseaux informatiques des équipements médicaux et les réseaux informatiques administratifs. Pour les organismes d'importance vitale tels qu'un producteur d'énergie ou un gestionnaire de transports, l'invention peut être appliquée à la gestion des transferts de données numériques entre les réseaux hébergeant les équipements industriels et les réseaux de gestion de la production et de bureautique. Les organisations du domaine de la défense peuvent appliquer l'invention à la gestion des transferts entre les réseaux informatiques hébergeant des données de sensibilité différente mais nécessitant néanmoins des échanges inter-réseau.

On se réfère à présent à la figure 1, qui illustre fonctionnellement un exemple de système de communication et à la figure 2, qui illustre un exemple d'algorithme de transfert de données entre différents réseaux, un tel algorithme étant applicable à un tel système de communication.

Un dispositif de transfert de données numériques est représenté, ce dispositif comporte quatre interfaces de communication (1, 2, 3, 4).

La première interface de communication (1) est raccordée, via un premier bus de données, à un premier contrôleur (11). Ce premier contrôleur est équipé d'une liaison réseau avec un premier réseau (10) et est relié à une première mémoire de partage (12). Le premier contrôleur (11) associé à la première mémoire de partage (12) fournit, du point de vue du premier réseau (10), deux partages réseau pour accueillir (S1), respectivement, les données numériques sortantes et les données numériques entrantes.

La deuxième interface de communication (2) est raccordée, via un deuxième bus de données, à un deuxième contrôleur (21). Ce deuxième contrôleur est équipé d'une liaison réseau avec un deuxième réseau (20) et est relié à une deuxième mémoire de partage (22). Le deuxième contrôleur (21) associé à la deuxième mémoire de partage (22) fournit, du point de vue du deuxième réseau (20), un partage réseau pour accueillir les données numériques sortantes et les données numériques entrantes.

La troisième interface de communication (3) est raccordée, via un troisième bus de données, à un contrôleur de transfert (30). Ce contrôleur de transfert agit en tant que contrôleur maître du premier contrôleur (11) et du deuxième contrôleur (21), ainsi qu'en tant que contrôleur du fonctionnement du dispositif de transfert de données numériques.

La quatrième interface de communication (4) est raccordée à une mémoire de transfert (40) prévue pour stocker temporairement des données en cours de transfert. Optionnellement, la mémoire de transfert (40) est raccordée de manière amovible à la quatrième interface de communication (4), c'est le cas par exemple d'une clé USB ou d'un disque dur externe.

Au sein du dispositif de transfert de données numériques, la quatrième interface de communication (4) peut être raccordée à tout moment à une seule autre interface parmi les trois autres interfaces de communication (1, 2, 3), par exemple sur commande issue du contrôleur de transfert (30).

C'est-à-dire que le contrôleur de transfert (30) peut émettre, à destination du dispositif de transfert de données numériques :
une commande d'activation d'un premier canal de transmission (C1) à travers la première et la quatrième interface de communication, ou
une commande d'activation d'un deuxième canal de transmission (C2) à travers la troisième et la quatrième interface de communication, ou encore
une commande d'activation d'un troisième canal de transmission (C3) à travers la deuxième et la quatrième interface de communication.

L'activation de l'un des canaux de transmission s'accompagne de la désactivation simultanée des deux autres canaux de transmission, de sorte, notamment :
qu'aucune liaison physique entre le premier réseau (10) et le deuxième réseau (20) ne soit jamais établie, et
qu'aucune liaison physique entre le premier ou le deuxième réseau (10, 20) d'une part et le contrôleur de transfert (30) d'autre part ne soit jamais établie non plus.

Concrètement, les commandes d'activation des canaux de transmission peuvent être simplement associées à des signaux admettant au minimum trois valeurs possibles. On peut par exemple définir une position par défaut où le troisième canal est activé. Les signaux d'activation peuvent ainsi être codés sur deux bits et admettre deux valeurs possibles, par exemple « 10 » pour l'activation du premier canal de transmission et « 01 » pour l'activation du deuxième canal de transmission. Tout autre codage, c'est à dire « 00 » et « 11 », correspond alors à la position par défaut, soit l'activation du troisième canal de transmission. De telles commandes d'activation peuvent donc se résumer, en d'autres termes, au pilotage, par le contrôleur de transfert (30), de deux dispositifs tout ou rien, soit deux interrupteurs binaires au sein du dispositif de transfert de données numériques. Ces échanges tout ou rien, représentés sur la figure 1 par des indications I/O, ne constituent pas des liaisons de données.

Lorsque le premier canal de transmission (C1)est activé (S2), des données peuvent être échangées (S4) entre la première mémoire de partage (12) et la mémoire de transfert (40). Spécifiquement, les données numériques sortantes issues du premier réseau (10) et préalablement stockées sur la première mémoire de partage (12) peuvent être transmises à et stockées sur la mémoire de transfert (40). De manière symétrique, les données entrantes, préalablement stockées sur la mémoire de transfert (40), peuvent aussi être transmises à et stockées sur la première mémoire de partage (12), en vue d'être transférées vers le premier réseau (10).

Les données entrantes et sortantes peuvent par exemple être stockées sur des partitions différentes de la mémoire de transfert (40). En d'autres termes, une première partition peut être dédiée à un transfert de données numériques depuis le premier réseau (10) vers le deuxième réseau (20), tandis qu'une deuxième partition peut être dédiée à un transfert de données numériques depuis le deuxième réseau (20) vers le premier réseau (10).

Ces transferts de données numériques peuvent être par exemple initiés, ou déclenchés (S3), par l'émission d'un signal de commande par le contrôleur de transfert (30), en tant que contrôleur maître, à destination du premier contrôleur (11), en tant que contrôleur esclave. Un tel signal de commande peut ainsi indiquer en substance au premier contrôleur (11) que la mémoire de transfert (40) est connectée et que le transfert uni- ou bidirectionnel peut commencer. Eu égard à sa simplicité, un tel signal de commande peut être transmis par une liaison directe entre le contrôleur de transfert (30) et le premier contrôleur (11) au moyen d'un unique échange tout ou rien, c'est-à-dire en actionnant un unique dispositif tout ou rien tel qu'un interrupteur.

Une fois les transferts de données numériques entre la première mémoire de partage (12) et la mémoire de transfert (40) achevés (S5), le premier contrôleur (11) peut à son tour en informer le contrôleur de transfert (30) sous la forme d'un nouvel échange tout ou rien. Suite à un tel échange tout ou rien, ou après expiration d'un délai prédéterminé alloué aux transferts de données numériques entre la mémoire de transfert (40) et la première mémoire de partage (12), le contrôleur de transfert (30) peut commander (S6) l'activation, par le dispositif de transfert de données numériques, du deuxième canal de transmission (C2).

Lorsque le deuxième canal de transmission (C2) est activé, la mémoire de transfert (40) est, comme déjà indiqué, raccordée au contrôleur de transfert (30) et déconnectée des deux contrôleurs (11, 21) des mémoires de partage (12, 22), et donc de ce fait, de chacun des deux réseaux (10, 20).

La mémoire de transfert (40) est, à ce stade, susceptible de stocker des données en cours de transfert issues de la première mémoire de partage (12), éventuellement sur une partition dédiée.

Le contrôleur de transfert (30) peut lire le contenu de la mémoire de transfert (40) à des fins de contrôle (S7).

Un objectif peut être de contrôler la légitimité de l'échange en cours. Il peut être prévu par exemple que les données en cours de transfert soient nécessairement accompagnées d'une signature en authentifiant l'émetteur. C'est-à-dire qu'il peut être prévu que le contrôleur de transfert n'autorise le transfert des données que si une telle signature est présente.

Le contrôleur de transfert (30) peut par ailleurs disposer d'un accès à une table de correspondance associant différents émetteurs potentiels à des droits respectifs qui leur sont attribués. Le contrôleur de transfert (30) peut alors vérifier les droits attribués à l'émetteur des données en cours de transfert, cet émetteur étant authentifié par sa signature, pour autoriser ou non le transfert des données stockées sur la mémoire de transfert (40).

Un autre objectif pouvant être visé par la lecture du contenu de la mémoire de transfert (40) par le contrôleur de transfert (30) est le contrôle des données en cours de transfert elles-mêmes. Ce contrôle peut inclure une vérification de leur innocuité au moyen par exemple d'un antivirus et/ou une vérification de leur authenticité, par exemple par des techniques de cryptographie et/ou inclure une vérification de format, de taille ou d'intégrité des données.

De manière générale, chaque contrôle de données effectué par le contrôleur de transfert (30) renvoie un résultat indicatif soit d'une violation, soit d'un respect d'une règle de sécurité prédéterminée relative auxdites données.

Les règles de sécurité peuvent être différenciées en fonction du réseau cible, c'est-à-dire qu'un premier ensemble de règles de sécurité peut être prévu pour toutes données destinées à être transférées vers le premier réseau (10) et qu'un deuxième ensemble de règles de sécurité peut être prévu pour toutes données destinées à être transférées vers le deuxième réseau (20).

Si au moins une règle de sécurité prédéfinie est violée, par exemple si le transfert est illégitime, ou si les données issues du premier réseau (10) et en cours de transfert présentent un risque en termes de sécurité ou ne sont pas authentiques, il convient de ne pas autoriser (S9) le transfert de ces données, c'est-à-dire de ne pas les transmettre vers le deuxième réseau (20). Pour ce faire, il peut être prévu que le contrôleur de transfert (30) commande (S10) l'effacement desdites données.

Si à l'inverse, aucune des règles de sécurité prédéfinies n'est violée, c'est-à-dire si par exemple le contrôleur de transfert considère que le transfert est légitime et que les données issues du premier réseau (10) et en cours de transfert sont à la fois authentiques et sans risque de sécurité pour le deuxième réseau (20), alors il peut être prévu que le contrôleur de transfert (30) en autorise (S8) le transfert.

Il peut être prévu que le contrôleur de transfert (30) consigne dans un journal les résultats de chaque vérification ou de chaque action de contrôle résultant soit en une autorisation du transfert soit en un effacement de données stockées sur la mémoire de transfert (40).

Ensuite, le dispositif de transfert de données numériques peut activer (S11) le troisième canal de transmission (C3), par exemple sur commande issue du contrôleur de transfert (30).

Lorsque le troisième canal de transmission (C3) est activé, la mémoire de transfert (40) est, comme déjà indiqué, raccordée au deuxième réseau (20) et déconnectée à la fois du premier réseau (10) et du contrôleur de transfert (30). A ce stade, les données en cours de transfert stockées sur la mémoire de transfert (40) ont préalablement fait l'objet d'une autorisation de transfert par le contrôleur de transfert (30), sans quoi elles en auraient été effacées.

Un échange de données (S13) entre la mémoire de transfert (40) et la deuxième mémoire de partage (22) est alors possible.

Cet échange peut être assuré par le deuxième contrôleur (21) assumant du point de vue du deuxième réseau (20) les fonctions de partages réseau pour accueillir, respectivement, les données entrantes et sortantes.

En effet, lorsque le troisième canal de transmission (C3) est activé, le deuxième contrôleur (21) peut déplacer les données issues de la mémoire de transfert (40) vers la deuxième mémoire de partage (22). Le deuxième contrôleur (21) peut également, en parallèle, déplacer les données issues du deuxième réseau (20) et préalablement stockées sur la deuxième mémoire de partage (22) vers la mémoire de transfert (40).

Une communication entre le contrôleur de transfert (30), en tant que contrôleur maître, et le deuxième contrôleur (21), en tant que contrôleur esclave, peut être prévue et s'effectuer de manière analogue à celle déjà décrite entre le contrôleur de transfert (30) et le premier contrôleur (11).

Un exemple d'une telle communication est décrit ci-après. Dans un premier temps, suite à l'activation du troisième canal de transmission (C3), le contrôleur de transfert (30) signale au deuxième contrôleur (21), par un échange tout ou rien, que le transfert des données peut débuter (S12). Dans un deuxième temps, un transfert unidirectionnel ou bidirectionnel de données s'effectue (S13) entre la deuxième mémoire de partage (22) et la mémoire de transfert (40), ce transfert étant piloté par le deuxième contrôleur (21). Enfin, dans un troisième temps, le deuxième contrôleur (21) signale au contrôleur de transfert (30), toujours par un échange tout ou rien, que le transfert de données est terminé (S14).

On a décrit le mécanisme général du transfert d'un premier ensemble de données depuis la première mémoire de partage (12) en lien avec le premier réseau (10) jusqu'à la deuxième mémoire de partage (22) en lien avec le deuxième réseau (20). Les données présentes sur la deuxième mémoire de partage (22) peuvent alors être diffusées (S15) dans le deuxième réseau (20).

Selon ce mécanisme, le transfert peut être piloté de bout en bout par un unique contrôleur maître, à savoir le contrôleur de transfert (30), dont le fonctionnement peut être rendu totalement indépendant de toute entité en lien avec l'un ou l'autre des deux réseaux (10, 20). En particulier, la deuxième interface (2) ne peut physiquement être raccordée à la première ou à la troisième interface (1, 3).

Par ailleurs, aucune liaison n'étant jamais établie entre la première interface (1) et la troisième interface (3), ni le contrôleur de transfert (30) ni le dispositif de transfert de données numériques ne peuvent être physiquement court-circuités.

Le mécanisme général du transfert d'un deuxième ensemble de données en sens inverse, c'est-à-dire depuis la deuxième mémoire de partage (22) en lien avec le deuxième réseau (20) jusqu'à la première mémoire de partage (12) en lien avec le premier réseau (10) fonctionne de manière analogue au transfert qui vient d'être décrit.

On considère que le dispositif de transfert de données numériques a activé (S11) le troisième canal de transmission (C3) et que le deuxième ensemble de données a été transféré (S13) depuis la deuxième mémoire de partage (22) vers la mémoire de transfert (40). La fin de ce transfert (S14) peut être par exemple signalée au contrôleur de transfert (30) par le deuxième contrôleur au moyen d'un signal tout ou rien. Alternativement, le contrôleur de transfert (30) peut prédire la fin de ce transfert comme correspondant à l'expiration d'un délai préétabli à compter par exemple de l'instant d'activation du troisième canal de transmission (C3).

Le contrôleur de transfert (30) peut donc commander le dispositif de transfert de données numériques, qui active (S6) à nouveau le deuxième canal de transmission (C2).

Il peut alors s'ensuivre un contrôle (S7), par le contrôleur de transfert (30), de la légitimité du nouvel échange en cours, ainsi que de l'intégrité et de l'authenticité des données transférées sur la mémoire de transfert (40) en provenance de la deuxième mémoire de partage (22). A l'issue de ce contrôle, le transfert desdites données vers le premier réseau (10) peut être soit autorisé (S8) soit refusé (S9).

En cas de refus, le contrôleur de transfert (30) peut ainsi effacer (S10) les données en cours de transfert de la mémoire de transfert (40).

Après ce contrôle, et, en cas de refus du transfert, après l'effacement des données correspondantes, le contrôleur de transfert (30) peut commander le dispositif de transfert de données numériques, afin que ce dernier active (S2) à nouveau le premier canal de transmission (C1).

Le deuxième ensemble de données peut alors être transféré (S4) depuis la mémoire de transfert (40) vers la première mémoire de partage (12). Ce transfert du deuxième ensemble de données peut, comme déjà décrit, être piloté par le premier contrôleur (11), lui-même piloté par le contrôleur de transfert (30).

Ainsi, le dispositif de transfert de données numériques permet d'effectuer un transfert de données bidirectionnel entre deux réseaux sans jamais établir de liaison physique entre ces deux réseaux. Ce transfert de données bidirectionnel peut par ailleurs être contrôlé par un contrôleur de transfert qui peut être rendu totalement indépendant et dénué en permanence de liaison physique avec l'un et l'autre de ces deux réseaux.

## Revendications

1. Dispositif de transfert de données numériques, dans un système de communication, entre un premier réseau (10) et un deuxième réseau (20), le dispositif comprenant :
une première interface de communication (1) avec le premier réseau,
une deuxième interface de communication (2) avec le deuxième réseau,
une troisième interface de communication (3) avec un contrôleur de transfert (30) de données numériques à travers le dispositif de transfert, et
une quatrième interface de communication (4) agencée pour être raccordée à au moins une mémoire de transfert (40),
le dispositif de transfert étant configuré pour recevoir successivement,
d'abord une commande d'activation d'un premier canal de transmission (C1) à travers la première et la quatrième interface de communication (1,4),
puis une commande d'activation d'un deuxième canal de transmission (C2) à travers la troisième et la quatrième interface de communication (3,4), et
enfin une commande d'activation d'un troisième canal de transmission (C3) à travers la deuxième et la quatrième interface de communication (2,4),
les commandes d'activation étant issues du pilotage, par le contrôleur de transfert, de deux interrupteurs binaires au sein du dispositif de transfert,
le dispositif de transfert étant configuré pour :
après réception de la commande d'activation du premier canal de transmission, simultanément activer le premier canal de transmission et désactiver le deuxième canal de transmission et le troisième canal de transmission,
après réception de la commande d'activation du deuxième canal de transmission, simultanément activer le deuxième canal de transmission et désactiver le premier canal de transmission et le troisième canal de transmission, et
après réception de la commande d'activation du troisième canal de transmission, simultanément activer le troisième canal de transmission et désactiver le premier canal de transmission et le deuxième canal de transmission,
de sorte qu'aucune liaison physique entre le premier réseau et le deuxième réseau ne soit jamais établie, et qu'aucune liaison physique entre le premier ou le deuxième réseau d'une part et le contrôleur de transfert d'autre part ne soit jamais établie.

2. Dispositif selon la revendication 1, comprenant au moins une mémoire de transfert (40) raccordée à la quatrième interface de communication.

3. Dispositif selon la revendication 2, dans lequel la mémoire de transfert (40) comprend :
une première partition dédiée à un stockage de données numériques en cours de transfert depuis le premier réseau (10) vers le deuxième réseau (20), et
une deuxième partition dédiée à un stockage de données numériques en cours de transfert depuis le deuxième réseau (20) vers le premier réseau (10).

4. Système de communication entre un premier réseau (10) et un deuxième réseau (20), le système comprenant :
un dispositif de transfert de données numériques selon l'une des revendications 1 à 3, et
un contrôleur de transfert (30) de données numériques à travers le dispositif de transfert,
ledit contrôleur de transfert (30) étant raccordé à la troisième interface de communication (3) du dispositif de transfert et étant indépendant à la fois du premier réseau et du deuxième réseau.

5. Système selon la revendication 4, le contrôleur de transfert (30) étant configuré en outre pour piloter la réception successive des commandes d'activation des canaux de transmission par le dispositif de transfert.

6. Système selon la revendication 4 ou 5, le contrôleur de transfert (30) étant configuré en outre pour piloter un premier contrôleur esclave (11) raccordé au premier réseau (10), en vue de transmettre, via le premier canal de transmission (C1), un premier ensemble de données numériques entrantes, issues du premier réseau, vers la mémoire de transfert (40) et stocker ledit premier ensemble de données entrantes en tant que premier ensemble de données en cours de transfert.

7. Système selon la revendication 6, le contrôleur de transfert (30) étant configuré en outre pour obtenir, via le deuxième canal de transmission (C2), le premier ensemble de données en cours de transfert en vue d'effectuer un contrôle dudit premier ensemble de données en cours de transfert, ledit contrôle fournissant un premier résultat indicatif d'un respect ou d'une violation d'au moins une règle de sécurité relative audit premier ensemble de données en cours de transfert.

8. Système selon la revendication 7, le contrôleur de transfert (30) étant configuré en outre pour piloter un deuxième contrôleur esclave (21) raccordé au deuxième réseau (20), en vue de transmettre, via le troisième canal de transmission (C3), le premier ensemble de données en cours de transfert vers le deuxième réseau en tant que premier ensemble de données numériques sortantes seulement lorsque le premier résultat n'est indicatif d'aucune violation de règle de sécurité.

9. Système selon la revendication 7 ou 8, le contrôleur de transfert (30) étant configuré en outre pour effacer de la mémoire de transfert (40) des données du premier ensemble de données en cours de transfert, sans les transmettre au préalable via le troisième canal de transmission (C3), lorsque le premier résultat les concernant est indicatif d'une violation d'au moins une règle de sécurité.

10. Système selon la revendication 9, configuré en outre pour :
piloter le deuxième contrôleur esclave (21), en vue de transmettre, via le troisième canal de transmission (C3), un second ensemble de données numériques entrantes, issues du deuxième réseau (20), vers la mémoire de transfert (40) et stocker ledit second ensemble de données entrantes en tant que second ensemble de données en cours de transfert,
obtenir, via le deuxième canal de transmission (C2), le second ensemble de données en cours de transfert en vue d'effectuer un contrôle dudit second ensemble de données en cours de transfert, ledit contrôle fournissant un second résultat indicatif d'un respect ou d'une violation d'au moins une règle de sécurité relative audit second ensemble de données en cours de transfert,
piloter le premier contrôleur esclave (11), en vue de transmettre, via le premier canal de transmission (C1), le second ensemble de données en cours de transfert vers le premier réseau (20) en tant que second ensemble de données numériques sortantes seulement lorsque le second résultat n'est indicatif d'aucune violation de règle de sécurité, et
effacer de la mémoire de transfert (40) des données du second ensemble de données en cours de transfert, sans le transmettre au préalable via le premier canal de transmission (C1), lorsque le second résultat les concernant est indicatif d'une violation d'au moins une règle de sécurité.

11. Procédé de transfert de données numériques, dans un système de communication, entre un premier réseau (10) et un deuxième réseau (20), par le biais d'un dispositif de transfert comprenant :
une première interface de communication (1) avec le premier réseau,
une deuxième interface de communication (2) avec le deuxième réseau,
une troisième interface de communication (3) avec un contrôleur de transfert (30) de données numériques à travers le dispositif de transfert,
une quatrième interface de communication (4), et
une mémoire de transfert (40) raccordée à la quatrième interface de communication (4),
le procédé comprenant une réception successive par le dispositif de transfert, d'abord d'une commande d'activation d'un premier canal de transmission (C1) à travers la première et la quatrième interface de communication (1,4), puis d'une commande d'activation d'un deuxième canal de transmission (C2) à travers la troisième et la quatrième interface de communication (3,4), et enfin d'une commande d'activation d'un troisième canal de transmission (C3) à travers la deuxième et la quatrième interface de communication (2,4), les commandes d'activation étant issues du pilotage, par le contrôleur de transfert, de deux interrupteurs binaires au sein du dispositif de transfert,
le procédé comprenant :
après réception de la commande d'activation du premier canal de transmission, simultanément activer le premier canal de transmission et désactiver le deuxième canal de transmission et le troisième canal de transmission,
après réception de la commande d'activation du deuxième canal de transmission, simultanément activer le deuxième canal de transmission et désactiver le premier canal de transmission et le troisième canal de transmission, et
après réception de la commande d'activation du troisième canal de transmission, simultanément activer le troisième canal de transmission et désactiver le premier canal de transmission et le deuxième canal de transmission,
de sorte qu'aucune liaison physique entre le premier réseau et le deuxième réseau ne soit jamais établie, et qu'aucune liaison physique entre le premier ou le deuxième réseau d'une part et le contrôleur de transfert d'autre part ne soit jamais établie.

12. Procédé de transfert selon la revendication 11, comprenant : une transmission, via le premier canal de transmission (C1), d'un premier ensemble de données numériques entrantes, issues du premier réseau (10), vers la mémoire de transfert (40), en vue de leur transfert en tant que premier ensemble de données en cours de transfert,
une communication, via le deuxième canal de transmission (C2), du premier ensemble de données en cours de transfert vers le contrôleur de transfert (30) en vue d'effectuer un contrôle dudit premier ensemble de données en cours de transfert, ledit contrôle fournissant un premier résultat indicatif d'un respect ou d'une violation d'au moins une règle de sécurité relative audit premier ensemble de données en cours de transfert,
une transmission, via le troisième canal de transmission (C3), du premier ensemble de données en cours de transfert vers le deuxième réseau (20) en tant que premier ensemble de données numériques sortantes seulement lorsque le premier résultat n'est indicatif d'aucune violation de règle de sécurité, et
un effacement, de la mémoire de transfert (40), de données du premier ensemble de données en cours de transfert lorsque le premier résultat les concernant est indicatif d'une violation d'au moins une règle de sécurité.

13. Procédé de transfert selon la revendication 11 ou 12, comprenant les étapes suivantes mises en œuvre par le contrôleur de transfert (30):
un déclenchement de l'activation du premier canal de transmission (C1) par le dispositif de transfert,
une émission d'un signal de début de transmission à destination d'un premier contrôleur esclave (11) raccordé au premier réseau,
après un temps imparti, une émission d'un signal de fin de transmission à destination du premier contrôleur esclave,
un déclenchement de l'activation du deuxième canal de transmission (C2),
une lecture et un contrôle d'un contenu de la mémoire de transfert (40)
optionnellement, un effacement de tout ou partie du contenu de la mémoire de transfert, et
un déclenchement de l'activation du troisième canal de transmission (C3).

14. Programme informatique comprenant une ou plusieurs instructions pour la mise en œuvre du procédé selon l'une des revendications 11 à 13 lorsque ce programme est exécuté par un processeur

## Patentansprüche

1. Übertragungsvorrichtung zum Übertragen von digitalen Daten in einem Kommunikationssystem zwischen einem ersten Netzwerk (10) und einen zweiten Netzwerk (20), wobei die Vorrichtung umfasst:
eine erste Kommunikationsschnittstelle (1) mit dem ersten Netzwerk,
eine zweite Kommunikationsschnittstelle (2) mit dem zweiten Netzwerk,
eine dritte Kommunikationsschnittstelle (3) mit einer Übertragungssteuereinrichtung (30) zum Übertragen von digitalen Daten durch die Übertragungsvorrichtung und eine vierte Kommunikationsschnittstelle (4), welche derart angeordnet ist, dass sie mit wenigstens einem Übertragungsspeicher (40) verbunden ist,
wobei die Übertragungsvorrichtung dazu eingerichtet ist, aufeinanderfolgend zu empfangen:
zunächst einen Befehl zum Aktivieren eines ersten Übertragungskanals (C1) durch die erste und die vierte Kommunikationsschnittstelle (1, 4),
dann einen Befehl zum Aktivieren eines zweiten Übertragungskanals durch die dritte und die vierte Kommunikationsschnittstelle (3, 4) und
schließlich einen Befehl zum Aktivieren eines dritten Übertragungskanals durch die zweite und die vierte Kommunikationsschnittstelle (2, 4),
wobei die Befehle aus einem Steuern, durch die Übertragungssteuereinrichtung, von zwei Binärschaltern innerhalb der Übertragungsvorrichtung resultieren,
wobei die Übertragungsvorrichtung eingerichtet ist, zum:
nach dem Empfangen des Befehls zum Aktivieren des ersten Übertragungskanals, gleichzeitig Aktivieren des ersten Übertragungskanals und Deaktivieren des zweiten und des dritten Übertragungskanals,
nach dem Empfangen des Befehls zum Aktivieren des zweiten Übertragungskanals, gleichzeitig Aktivieren des zweiten Übertragungskanals und Deaktivieren des ersten und des dritten Übertragungskanals und,
nach dem Empfangen des Befehls zum Aktivieren des dritten Übertragungskanals, gleichzeitig Aktivieren des dritten Übertragungskanals und Deaktivieren des ersten und des zweiten Übertragungskanals,
so dass niemals eine physische Verbindung zwischen dem ersten Netzwerk und dem zweiten Netzwerk hergestellt ist und niemals eine physische Verbindung zwischen dem ersten oder dem zweiten Netzwerk auf der einen Seite und der Übertragungssteuereinrichtung auf der anderen Seite hergestellt ist.

2. Vorrichtung nach Anspruch 1, umfassend wenigstens einen Übertragungsspeicher (40), welcher mit der vierten Kommunikationsschnittstelle verbunden ist.

3. Vorrichtung nach Anspruch 2, wobei der Übertragungsspeicher (40) umfasst:
eine erste Partition, welche zum Speichern von digitalen Daten vorgesehen ist, welche von dem ersten Netzwerk (10) zu dem zweiten Netzwerk (20) übertragen werden, und eine zweite Partition, welche zum Speichern von digitalen Daten vorgesehen ist, welche von dem zweiten Netzwerk (20) zu dem ersten Netzwerk (10) übertragen werden.

4. Kommunikationssystem zwischen einem ersten Netzwerk (10) und einen zweiten Netzwerk (20), wobei das System umfasst:
eine Übertragungsvorrichtung zum Übertragen von digitalen Daten nach einem der Ansprüche 1 bis 3 und
eine Übertragungssteuereinrichtung (30) zum Steuern der Übertragung von digitalen Daten durch die Übertragungsvorrichtung,
wobei die Übertragungssteuereinrichtung (30) mit der dritten
Kommunikationsschnittstelle (3) der Übertragungsvorrichtung verbunden ist und von sowohl dem ersten Netzwerk als auch dem zweiten Netzwerk unabhängig ist.

5. System nach Anspruch 4, wobei die Übertragungssteuereinrichtung (30) ferner dazu eingerichtet ist, den aufeinanderfolgenden Empfang der Befehle zum Aktivieren der Übertragungskanäle durch die Übertragungsvorrichtung zu steuern.

6. System nach Anspruch 4 oder 5, wobei die Übertragungssteuereinrichtung (30) ferner dazu eingerichtet ist, eine erste Slave-Steuereinrichtung (11) zu steuern, welche mit dem ersten Netzwerk (10) verbunden ist, mit einem Ziel eines Übertragens über den ersten Übertragungskanal (C1) an den Übertragungsspeicher (40) eines ersten Satzes von eingehenden digitalen Daten, welcher aus dem ersten Netzwerk stammt, und den ersten Satz von eingehenden Daten als einen ersten Satz von Daten zu speichern, welcher übertragen wird.

7. System nach Anspruch 6, wobei die Übertragungssteuereinrichtung (30) ferner dazu eingerichtet ist, über den zweiten Übertragungskanal (C2) den ersten Satz von Daten zu erhalten, welcher übertragen wird, um eine Verifizierung des ersten Satzes von Daten durchzuführen, welcher übertragen wird, wobei die Verifizierung ein erstes Ergebnis bereitstellt, welches eine Einhaltung oder einen Verstoß gegen wenigstens eine Sicherheitsregel anzeigt, welche den ersten Satz von Daten betrifft, welcher übertragen wird.

8. System nach Anspruch 7, wobei die Übertragungssteuereinrichtung (30) ferner dazu eingerichtet ist, eine zweite Slave-Steuereinrichtung (21) zu steuern, welche mit dem zweiten Netzwerk (20) verbunden ist, mit einem Ziel eines Übertragens des ersten Satzes von Daten, welcher übertragen wird, über den dritten Übertragungskanal (C3) an das zweite Netzwerk als einen ersten Satz von ausgehenden digitalen Daten, nur dann, wenn das erste Ergebnis keinen Verstoß gegen eine Sicherheitsregel anzeigt.

9. System nach Anspruch 7 oder 8, wobei die Übertragungssteuereinrichtung (30) ferner dazu eingerichtet ist, aus dem Übertragungsspeicher (40) Daten des ersten Satzes von Daten zu löschen, welcher übertragen wird, ohne ihn zunächst über den dritten Übertragungskanal (C3) zu übertragen, wenn des erste Ergebnis in Bezug auf die Daten einen Verstoß gegen wenigstens eine Sicherheitsregel anzeigt.

10. System nach Anspruch 9, ferner eingerichtet zum:
Steuern der zweiten Slave-Steuereinrichtung (21) mit einem Ziel eines Übertragens über den dritten Übertragungskanal (C3) an den Übertragungsspeicher (40) eines zweiten Satzes von eingehenden digitalen Daten, welcher aus dem ersten Netzwerk stammt, und den zweiten Satz von eingehenden Daten als einen zweiten Satz von Daten zu speichern, welcher übertragen wird,
Erhalten über den zweiten Übertragungskanal (C2) des zweiten Satzes von Daten, welcher übertragen wird, mit einem Ziel eines Durchführens einer Verifizierung des zweiten Satzes von Daten, welcher übertragen wird, wobei die Verifizierung ein zweites Ergebnis bereitstellt, welches eine Einhaltung oder einen Verstoß gegen wenigstens eine Sicherheitsregel anzeigt, welche den zweiten Satz von Daten betrifft, welcher übertragen wird,
Steuern der ersten Slave-Steuereinrichtung (11) mit einem Ziel eines Übertragens über den ersten Übertragungskanal (C1) an das erste Netzwerk (20) des zweiten Satzes von Daten, welcher übertragen wird, wobei der zweite Satz nur dann als ein zweiter Satz von ausgehenden digitalen Daten übertragen wird, wenn das zweite Ergebnis keinen Verstoß gegen eine Sicherheitsregel anzeigt, und
Löschen aus dem Übertragungsspeicher (40) von Daten des zweiten Satzes von Daten, welcher übertragen wird, ohne ihn zunächst über den ersten Übertragungskanal (C1) zu übertragen, wenn des zweite Ergebnis in Bezug auf die Daten einen Verstoß gegen wenigstens eine Sicherheitsregel anzeigt.

11. Verfahren zum Übertragen von digitalen Daten in einem Kommunikationssystem zwischen einem ersten Netzwerk (10) und einen zweiten Netzwerk (20), mittels einer Übertragungsvorrichtung, umfassend:
eine erste Kommunikationsschnittstelle (1) mit dem ersten Netzwerk,
eine zweite Kommunikationsschnittstelle (2) mit dem zweiten Netzwerk,
eine dritte Kommunikationsschnittstelle (3) mit einer Übertragungssteuereinrichtung (30) zum Steuern der Übertragung von digitalen Daten durch die Übertragungsvorrichtung,
eine vierte Kommunikationsschnittstelle (4) und
einen Übertragungsspeicher (40), welcher mit der vierten Kommunikationsschnittstelle (4) verbunden ist,
wobei das Verfahren ein aufeinanderfolgendes Empfangen durch die Übertragungsvorrichtung umfasst, von:
zunächst einem Befehl zum Aktivieren eines ersten Übertragungskanals (C1) durch die erste und die vierte Kommunikationsschnittstelle (1, 4), dann einem Befehl zum Aktivieren eines zweiten Übertragungskanals (C2) durch die dritte und die vierte Kommunikationsschnittstelle (3, 4) und schließlich einem Befehl zum Aktivieren eines dritten Übertragungskanals (C3) durch die zweite und die vierte Kommunikationsschnittstelle (2, 4),
wobei die Befehle aus einem Steuern, durch die Übertragungssteuereinrichtung, von zwei Binärschaltern innerhalb der Übertragungsvorrichtung resultieren,
wobei das Verfahren umfasst:
nach dem Empfangen des Befehls zum Aktivieren des ersten Übertragungskanals, gleichzeitig Aktivieren des ersten Übertragungskanals und Deaktivieren des zweiten und des dritten Übertragungskanals,
nach dem Empfangen des Befehls zum Aktivieren des zweiten Übertragungskanals, gleichzeitig Aktivieren des zweiten Übertragungskanals und Deaktivieren des ersten und des dritten Übertragungskanals und,
nach dem Empfangen des Befehls zum Aktivieren des dritten Übertragungskanals, gleichzeitig Aktivieren des dritten Übertragungskanals und Deaktivieren des ersten und des zweiten Übertragungskanals,
so dass niemals eine physische Verbindung zwischen dem ersten Netzwerk und dem zweiten Netzwerk hergestellt wird und niemals eine physische Verbindung zwischen dem ersten oder dem zweiten Netzwerk auf der einen Seite und der Übertragungssteuereinrichtung auf der anderen Seite hergestellt wird.

12. Verfahren nach Anspruch 11, umfassend:
Übertragen über den ersten Übertragungskanal (C1) an den Übertragungsspeicher (40) eines ersten Satzes von eingehenden digitalen Daten, welcher aus dem ersten Netzwerk (10) stammt, mit einem Ziel ihrer Übertragung als ein erster Satz von Daten, welcher übertragen wird,
Kommunizieren über den zweiten Übertragungskanal (C2) an die Übertragungssteuereinrichtung (30) des ersten Satzes von Daten, welcher übertragen wird, mit einem Ziel eines Durchführens einer Verifizierung des ersten Satzes von Daten, welcher übertragen wird, wobei die Verifizierung ein erstes Ergebnis bereitstellt, welches eine Einhaltung oder einen Verstoß gegen wenigstens eine Sicherheitsregel bereitstellt, welche den ersten Satz von Daten betrifft, welcher übertragen wird, Übertragen über den dritten Übertragungskanal (C3) an das zweite Netzwerk (20) des ersten Satzes von Daten, welcher übertragen wird, als einen ersten Satz von ausgehenden digitalen Daten, nur dann, wenn das erste Ergebnis keinen Verstoß gegen eine Sicherheitsregel anzeigt, und
Löschen aus dem Übertragungsspeicher (40) von Daten aus dem ersten Satz von Daten, welcher übertragen wird, wenn das erste Ergebnis in Bezug auf diese Daten einen Verstoß gegen wenigstens eine Sicherheitsregel anzeigt.

13. Verfahren nach Anspruch 11 oder 12, umfassend die durch die Übertragungseinrichtung (30) implementierten folgenden Schritte:
Auslösen einer Aktivierung des ersten Übertragungskanals (C1),
Senden eines Starts eines Übertragungssignals an eine erste Slave-Steuereinrichtung (11), welche mit dem ersten Netzwerk verbunden ist,
nach einer zugeteilten Zeit, Senden eines Endes des Übertragungssignals an die erste Slave-Steuereinrichtung,
Auslösen einer Aktivierung des zweiten Übertragungskanals (C2),
Lesen und Verifizieren eines Teils oder des gesamten Inhalts des Übertragungsspeichers (40),
optional Löschen eines Teils oder des gesamten Inhalts des Übertragungsspeichers und
Auslösen einer Aktivierung des dritten Übertragungskanals (C3).

14. Nicht-transitorisches computerlesbares Speichermedium, welches eine oder mehrere Anweisungen zum Implementieren des Verfahrens nach einem der Ansprüche 11 bis 13 implementiert, wenn die eine oder die mehreren Anweisungen durch einen Prozessor ausgeführt werden.

## Claims

1. Transfer device for transferring digital data, in a communication system, between a first network (10) and a second network (20), the device comprising:
a first communication interface (1) with the first network,
a second communication interface (2) with the second network,
a third communication interface (3) with a transfer controller (30) for transferring digital data through the transfer device, and
a fourth communication interface (4) arranged to be connected to at least one transfer memory (40),
the transfer device being configured to receive successively,
first a command to activate a first transmission channel (C1) through the first and fourth communication interface (1,4),
then a command to activate a second transmission channel through the third and fourth communication interface (3,4), and
finally a command to activate a third transmission channel through the second and fourth communication interface (2,4),
the commands resulting from controlling, by the transfer controller, two binary switches within the transfer device,
the transfer device being configured to:
after receiving the command to activate the first transmission channel, simultaneously activate the first transmission channel and deactivate the second and third transmission channels,
after receiving the command to activate the second transmission channel, simultaneously activate the second transmission channel and deactivate the first and third transmission channels, and
after receiving the command to activate the third transmission channel, simultaneously activate the third transmission channel and deactivate the first and second transmission channels,
such that no physical connection between the first network and the second network is ever established, and no physical connection between the first or second network on the one hand, and the transfer controller on the other hand, is ever established.

2. Device according to claim 1, comprising at least one transfer memory (40) connected to the fourth communication interface.

3. Device according to claim 2, wherein the transfer memory (40) comprises:
a first partition dedicated to storing digital data being transferred from the first network (10) to the second network (20), and
a second partition dedicated to storing digital data being transferred from the second network (20) to the first network (10).

4. Communication system between a first network (10) and a second network (20), the system comprising:
a transfer device for transferring digital data according to any one of claims 1 to 3, and
a transfer controller (30) for controlling the transfer of digital data through the transfer device,
said transfer controller (30) being connected to the third communication interface (3) of the transfer device and being independent of both the first network and the second network.

5. System according to claim 4, the transfer controller (30) further being configured to control the successive reception of the commands to activate the transmission channels by the transfer device.

6. System according to claim 4 or 5, the transfer controller (30) further being configured to control a first slave controller (11) connected to the first network (10), with a view to transmitting to the transfer memory (40), via the first transmission channel (C1), a first set of incoming digital data coming from the first network, and to store said first set of incoming data as a first set of data being transferred.

7. System according to claim 6, the transfer controller (30) further being configured to obtain, via the second transmission channel (C2), the first set of data being transferred in order to perform a verification of said first set of data being transferred, said verification providing a first result indicative of compliance with or violation of at least one security rule relating to said first set of data being transferred.

8. System according to claim 7, the transfer controller (30) further being configured to control a second slave controller (21) connected to the second network (20), with a view to transmitting the first set of data being transferred, to the second network, via the third transmission channel (C3), as a first set of outgoing digital data, only when the first result is not indicative of any security rule violation.

9. System according to claim 7 or 8, the transfer controller (30) further being configured to erase, from the transfer memory (40), data of the first set of data being transferred, without first transmitting them via the third transmission channel (C3), when the first result concerning the data is indicative of a violation of at least one security rule.

10. System according to claim 9, further configured to:
control the second slave controller (21), with a view to transmitting to the transfer memory (40), via the third transmission channel (C3), a second set of incoming digital data coming from the second network (20), and to store said second set of incoming data as a second set of data being transferred,
obtain, via the second transmission channel (C2), the second set of data being transferred, with a view to performing a verification of said second set of data being transferred, said verification providing a second result indicative of compliance with or violation of at least one security rule relating to said second set of data being transferred,
control the first slave controller (11), with a view to transmitting to the first network (20), via the first transmission channel (C1), the second set of data being transferred, as a second set of outgoing digital data, only when the second result is not indicative of any security rule violation, and
erase, from the transfer memory (40), data of the second set of data being transferred, without first transmitting it via the first transmission channel (C1), when the second result concerning the data is indicative of a violation of at least one security rule.

11. Method for transferring digital data, in a communication system, between a first network (10) and a second network (20), by means of a transfer device comprising:
a first communication interface (1) with the first network,
a second communication interface (2) with the second network,
a third communication interface (3) with a transfer controller (30) for controlling the transfer of digital data through the transfer device,
a fourth communication interface (4), and
a transfer memory (40) connected to the fourth communication interface (4),
the method comprising receiving successively by the transfer device
first a command to activate a first transmission channel (C1) through the first and fourth communication interface (1,4), then a command to activate a second transmission channel (C2) through the third and fourth communication interface (3,4), and finally a command to activate a third transmission channel (C3) through the second and fourth communication interface (2,4),
the commands resulting from controlling, by the transfer controller, two binary switches within the transfer device,
the method comprising:
after receiving the command to activate the first transmission channel, simultaneously activate the first transmission channel and deactivate the second and third transmission channels,
after receiving the command to activate the second transmission channel, simultaneously activate the second transmission channel and deactivate the first and third transmission channels, and
after receiving the command to activate the third transmission channel, simultaneously activate the third transmission channel and deactivate the first and second transmission channels,
such that no physical connection between the first network and the second network is ever established, and no physical connection between the first or second network on the one hand, and the transfer controller on the other hand, is ever established.

12. Method according to claim 11, comprising:
transmitting to the transfer memory (40), via the first transmission channel (C1), a first set of incoming digital data coming from the first network (10), with a view to their transfer as a first set of data being transferred,
communicating to the transfer controller (30), via the second transmission channel (C2), the first set of data being transferred, with a view to performing a verification of said first set of data being transferred, said verification providing a first result indicative of compliance with or violation of at least one security rule relating to said first set of data being transferred,
transmitting to the second network (20), via the third transmission channel (C3), the first set of data being transferred, as a first set of outgoing digital data, only when the first result is not indicative of any security rule violation, and
erasing, from the transfer memory (40), data from the first set of data being transferred, when the first result concerning these data is indicative of a violation of at least one security rule.

13. Method according to claim 11 or 12, comprising the following steps implemented by the transfer controller (30):
triggering an activation of the first transmission channel (C1),
sending a start of a transmission signal to a first slave controller (11) connected to the first network,
after an allotted time, sending an end of the transmission signal to the first slave controller,
triggering an activation of the second transmission channel (C2),
reading and verifying some or all of the contents of the transfer memory (40),
optionally, erasing some or all of the contents of the transfer memory, and
triggering an activation of the third transmission channel (C3).

14. Non-transitory computer-readable storage medium storing one or more instructions for implementing the method according to any one of claims 11 to 13 when the one or more instructions are executed by a processor.
